# EUROPEAN PATENT SPECIFICATION

(11) **EP 3 922 560 B1**
(45) Date of publication and mention of the grant of the patent: **20.11.2024**
(21) Application number: 21179334.4
(22) Date of filing: 14.06.2021
(51) Int. Cl.: B64D 11/06

(54) **ADJUSTABLE SEAL FRAME FOR FLOOR MOUNTED CABIN ATTENDANT SEATS**
VERSTELLBARER DICHTUNGSRAHMEN FÜR BODENMONTIERTE KABINENBEGLEITERSITZE
CADRE D'ÉTANCHÉITÉ RÉGLABLE POUR SIÈGES DE MEMBRE D'ÉQUIPAGE MONTÉS AU SOL

(30) Priority: 13.06.2020 IN 202041024885; 11.06.2021 US 202117345602
(43) Date of publication of application: 15.12.2021
(73) Proprietor: AMI Industries, Inc., Colorado Springs, CO 80916 (US)
(72) Inventor: JAYARAMU, Apoorva, Bengaluru, KA 560026 (IN); SALDANHA, Nikhil Anthony, Bengaluru, KA 560005 (IN)
(74) Representative: Dehns

(56) References cited:
- US-A- 2 702 074
- US-B2- 9 873 510

## Description

### PRIORITY

The present application claims the benefit of Indian App. No. 202041024885 (filed June 13, 2020).

### BACKGROUND

Floor mounted cabin attendant seats leave a gap between the posterior surface of the seat of the nearest cabin wall or bulkhead. That gap may be covered by a seal frame that abuts the wall and supports fabric (leather, cloth, sheet metal, etc.) to cover and obscure the gap. The gap is often irregular, tapering side-to-side, top-to-bottom, or both; furthermore, such irregularity may be different from one aircraft to another, or at different locations within the same aircraft. Seat covers and frames are disclosed in US 9873510 B2.

Generally, such irregularities require different gap covers for every individual scenario. Producing and fitting different gap covers increases design time, material needs, and installation complexity.

### SUMMARY

In one aspect, embodiments of the inventive concepts disclosed herein are directed to a floor mounted aircraft seat as defined by claim 1.

In a further aspect, the displacement elements are leaf springs or coil springs. Alternatively, they may be manually adjustable threaded elements.

### BRIEF DESCRIPTION OF THE DRAWINGS

The numerous advantages of the embodiments of the inventive concepts disclosed herein may be better understood by those skilled in the art by reference to the accompanying figures in which:
FIG. 1A shows a block representation of a top view and a side view of a floor mounted aircraft seat and seal frame according to an unclaimed example;
FIG. 1B shows a block representation of a top view and a side view of a floor mounted aircraft seat and seal frame according to an unclaimed example;
FIG. 1C shows a block representation of a top view and a side view of a floor mounted aircraft seat and seal frame according to an unclaimed example;
FIG. 1D shows a block representation of a top view and a side view of a floor mounted aircraft seat and seal frame according to an unclaimed example;
FIG. 2 shows a perspective view and a detail view of a frame according to an exemplary embodiment;
FIG. 3A shows a block representation of a side view of a floor mounted aircraft seat and seal frame according to an exemplary embodiment;
FIG. 3B shows a detail view of a fabric tensioning element according to an exemplary embodiment;
FIG. 4A show a rear view of a seal frame according to an exemplary embodiment;
FIG. 4B show a perspective view of a seal frame according to an exemplary embodiment;
FIG. 5A shows a block representation of a side view of a floor mounted aircraft seat and seal frame according to an exemplary embodiment;
FIG. 5B shows a perspective and detail views of a seal frame according to an exemplary embodiment;
FIG. 6A shows a block representation of a side view of a floor mounted aircraft seat and seal frame according to an exemplary embodiment;
FIG. 6B shows a perspective and a detail view of a seal frame according to an exemplary embodiment;
FIG. 7 shows various block representations of side views and top views of a floor mounted aircraft seat and seal frame according to an exemplary embodiment;

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Broadly, embodiments of the inventive concepts disclosed herein are directed to a floor mounted aircraft seat having a seal frame, displacing elements connecting the frame to the posterior of the seat, and fabric tensioning elements that keep a gap covering fabric connected to the posterior surface of the seat in tension around the frame. The frame displacing elements allow the frame to conform to a wall behind the seat, regardless of the tapering of the wall.

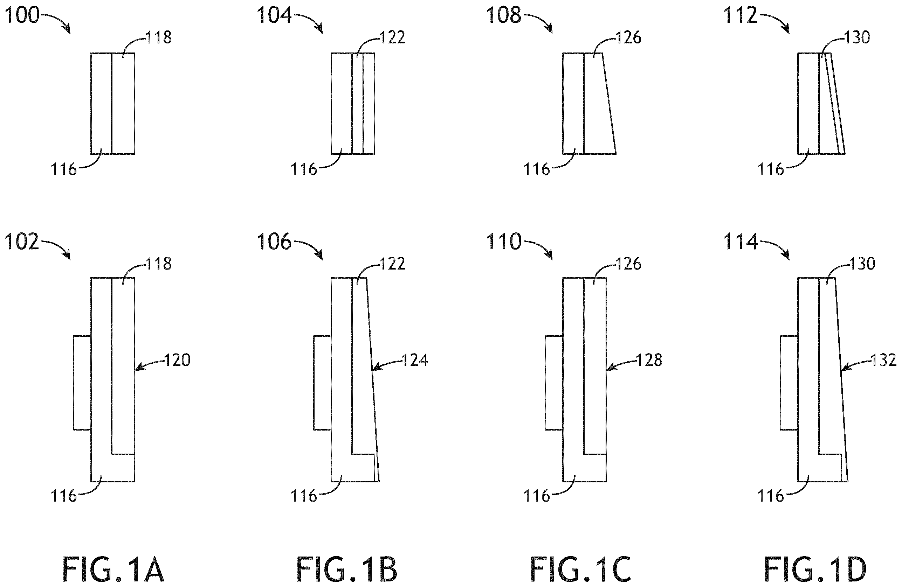

Referring to FIGS. 1A-1D, block representations of top views 100, 104, 108, 112 and side views 102, 106, 110, 114 of a floor mounted aircraft seat 116 and seal frame 118, 122, 126, 130 according to unclaimed examples are shown. In one orientation, such as in FIG. 1A, the posterior surface of the floor mounted aircraft seat 102 may be substantially parallel to the corresponding wall 120 such that the seal frame 118 does not need to taper. Alternatively, such as in FIG. 1B, the wall 124 may be angled top to bottom with respect to the posterior surface of the floor mounted aircraft seat 102 such that the seal frame 122 must extend further at the bottom than the top, but maintains a substantially constant cross-section from side to side. Alternatively, such as in FIG. 1C, the wall 128 may be angled side to side with respect to the posterior surface of the floor mounted aircraft seat 102 such that the seal frame 126 must extend on one side than the other, but maintains a substantially constant cross-section from top to bottom. Alternatively, such as in FIG. 1D, the wall 132 may be angled top to bottom and side to side with respect to the posterior surface of the floor mounted aircraft seat 102 such that the seal frame 130 must extend different distances at each corner. Traditionally, a floor mounted aircraft seat 102 would require separately engineered seal frames 118, 122, 126, 130 to account for each alternative, and potentially different degrees of each alternative depending on the aircraft and location within the aircraft.

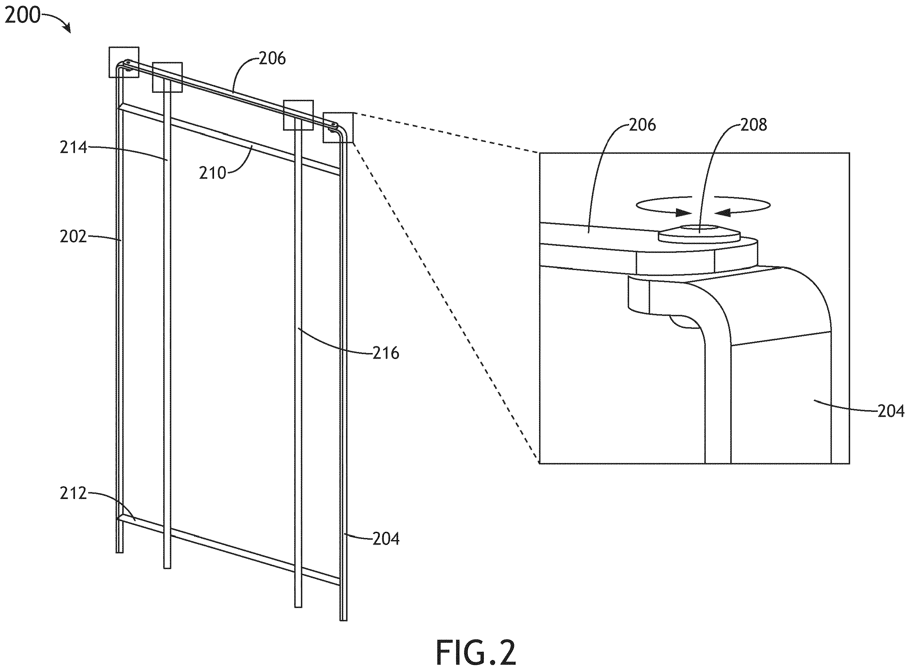

Referring to FIG. 2, a perspective view and a detail view of a frame 200 according to an exemplary embodiment is shown. The frame 200 comprises two vertical elements 202, 204, each of the vertical elements 202, 204 connected at a terminal to at least one horizontal element 206. In at least one embodiment, the vertical elements 202, 204 are connected to the horizontal element 206 via a pivot joint 208 such that the vertical elements 202, 204 may pivot as necessary provide a flat surface to abut an aircraft wall when installed, no matter how the frame 200 is oriented with respect to the corresponding floor mounted aircraft seat. The interface between such flat surface and aircraft wall would include a fabric element as more fully described herein.

In at least one embodiment, the frame 200 includes a plurality of rigid fabric connection strips 210, 212, 214, 216. The rigid fabric connection strips 210, 212, 214, 216 may be disposed substantially parallel to the vertical elements 202, 204 and horizontal elements 206.

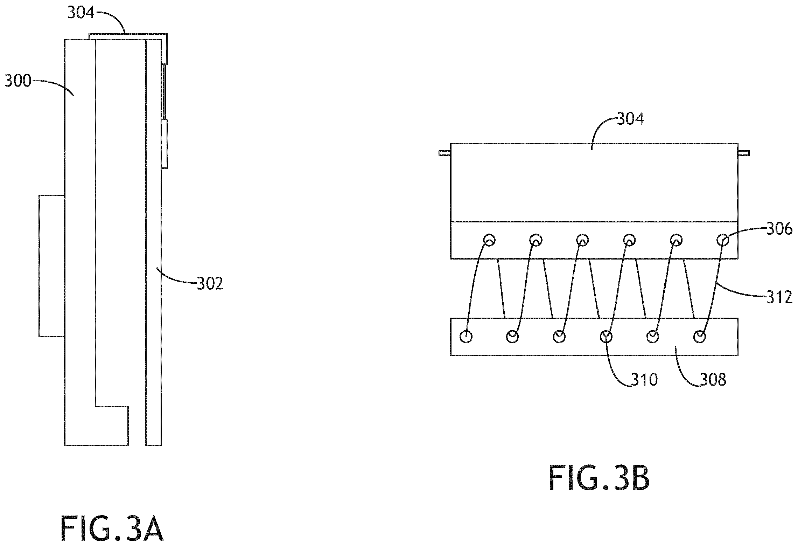

Referring to FIGS. 3A-3B, a block representation of a side view of a floor mounted aircraft seat 300 and seal frame 302, and a detail view of a fabric tensioning element according to an exemplary embodiment are shown. The fabric tensioning element may comprise one or more rigid fabric connection strips 308 that each define a plurality of holes 310 or other features suitable for receiving or attaching an elastic element 312 such as an elastic cord. A gap covering fabric 304, affixed to the posterior surface of the floor mounted aircraft seat 300 may extend around one or more edges of the frame 302. Each edge of the gap covering fabric 304 may define a plurality of holes 306 or other features suitable for receiving or attaching the elastic element 312. The gap covering fabric 304 is thereby elastically attached to the rigid fabric connection strips 308

In at least one embodiment, the gap covering fabric holes 306 may be protected gromets or other edge protecting feature to distribute the load applied by the elastic element 312.

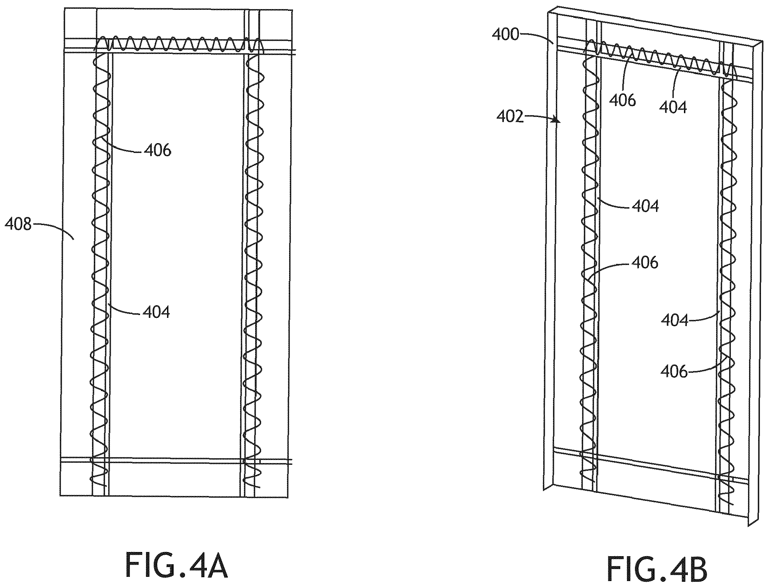

Referring to FIGS. 4A-4B, a rear view and a perspective view of a seal frame according to an exemplary embodiment are shown. A gap covering fabric 400, extending from a posterior surface of a floor mounted aircraft seat, wraps around one or more edges of a frame 402 and connects to corresponding rigid fabric connection strips 404 via one or more elastic elements 406. In actual application, the frame 402 may be displaced from the posterior surface of the floor mounted aircraft seat in an irregular fashion. The elastic elements 406 maintain tension of the gap covering fabric 400 no matter how the edges of the frame 402 are displaced. It may be appreciated that the disposition of the rigid fabric connection strips 404 and elastic elements 406 may maintain a set amount of tension on gap covering fabric 404 even when the frame 402 is minimally displaced.

Furthermore, the gap covering fabric 400 extending around the edges of the frame 402 provides a barrier between the frame 402 and the corresponding wall, preventing wear on the wall, especially where the frame 402 comprises metal.

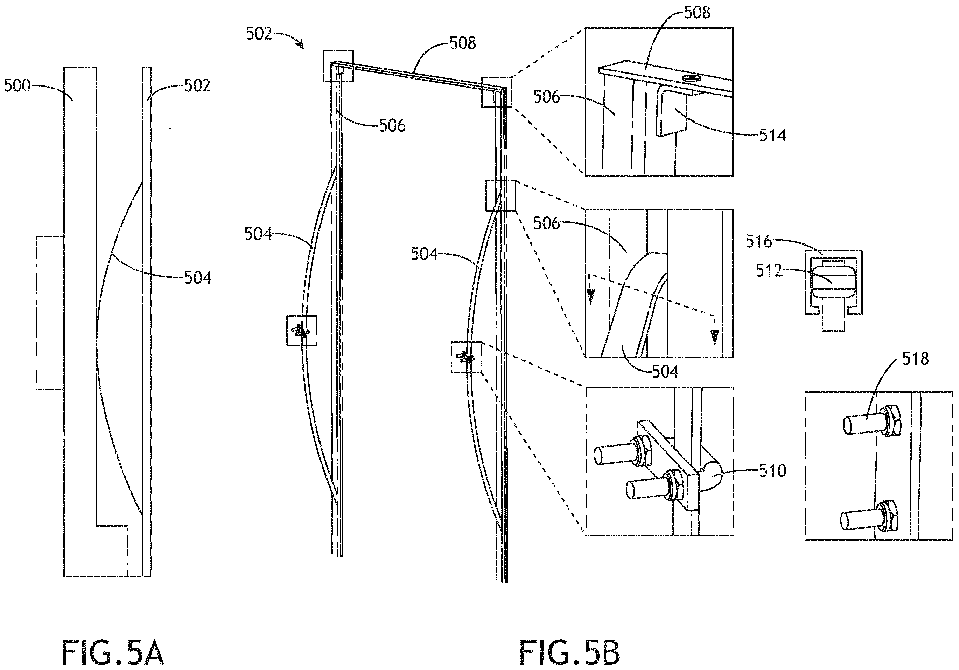

Referring to FIGS. 5A-5B, a block representation of a side view of a floor mounted aircraft seat 500 and seal frame, and a perspective and detail views of a seal frame according to an exemplary embodiment are shown. A frame 502 connected to a posterior surface of the floor mounted aircraft seat 500 comprises two vertical elements 506 and one or more horizontal elements 508 connected to each other via pivoting elements 514 at their respective terminuses. The pivoting elements 514 allow the vertical elements 506 to abut the wall with a flat surface.

In at least one embodiment, leaf springs 504 are connected to each of the vertical elements 506 at two points, each point comprising a close C-section portion 516 of the frame 502 to retain the corresponding portion of the leaf spring 504. For example, each leaf spring 504 may engage upper and lower bushings 512 in the corresponding vertical element 506, retained by the C-section portion 516.

In at least one embodiment, each leaf spring 504 is connected to the posterior surface of the floor mounted aircraft seat 500 via a bracket 510 configured to allow the corresponding leaf spring 504 to translate up or down or a plurality of bolts 518 passing through corresponding holes in the center of the spring. Translation of the leaf springs within the frame allows the vertical elements 506 to reorient and conform to the vertical taper of the abutting aircraft wall. Furthermore, the force applied by the leaf springs 504 biases each vertical element 506 to contact the aircraft wall even if the aircraft wall has a complex taper that vertical elements 506 to extend different distances. Finally, the pivoting elements 514 allow the top of the frame 502 to have a different horizontal taper than the bottom of the frame 502; or to put it another way, the two leaf springs 504 may have different translations with respect to the corresponding bracket 510 such that each vertical element 506 has a different vertical angle as well as a different displacement form the posterior surface of the floor mounted aircraft seat 500.

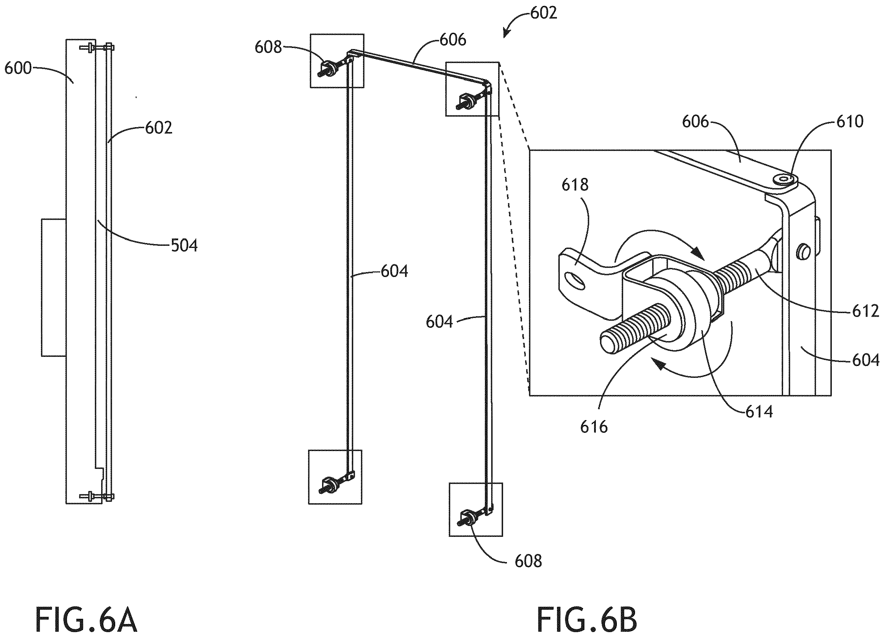

Referring to FIGS. 6A-6B, a block representation of a side view of a floor mounted aircraft seat 600 and seal frame, and a perspective and a detail view of a seal frame according to an exemplary embodiment are shown. A frame 602 connected to a posterior surface of the floor mounted aircraft seat 600 comprises vertical elements 604 and one more horizontal elements 606 connected to each other via pivoting elements 610 at their respective terminuses. The pivoting elements 610 allow the vertical elements 604 to displace independently from the posterior surface of the floor mounted aircraft seat 600 without placing torsional stress of the elements connecting the frame 602 to the floor mounted aircraft seat 600.

In at least one embodiment, manually adjustable linear actuators 608 connect the frame 602 to the floor mounted aircraft seat 600 at points generally proximal to the corners of the frame 602. The manually adjustable linear actuators 608 may comprise a threaded eyebolt 612 pivotably affixed to the corresponding vertical element 604 or horizontal element 606. Furthermore, a mounting bracket 616 is affixed to a corresponding location on the floor mounted aircraft seat 600 with the threaded portion of the eyebolt 612 passing through. The mounting bracket 616 is free to rotate about a through-hole pivotably connecting the mounting bracket 616 to a back-skin bracket 618, allowing the frame 602 to conform to the corresponding aircraft wall. A threaded adjusting wheel 614 disposed within the mounting bracket 616 and engaging the threaded portion of the eyebolt 612 allows the eyebolt 612 to be manually adjusted in or out, and thereby dictate the shape of the frame 602. Such adjustments would be made at the time of installation and should not be necessary afterwards.

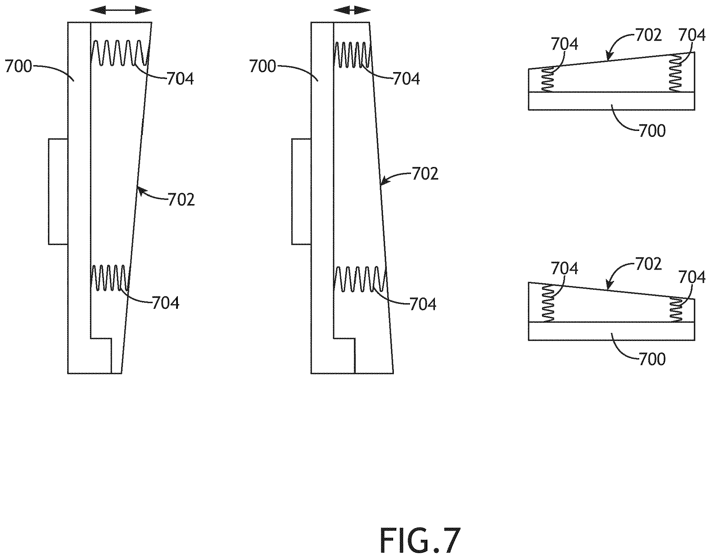

Referring to FIG. 7, various block representations of side views and top views of a floor mounted aircraft seat 700 and seal frame according to an exemplary embodiment are shown. A frame connected to a posterior surface of the floor mounted aircraft seat 700 may be displaced via compression or coil springs 704 disposed proximal to the corners of the frame. Provided the aircraft wall 702 is always within a distance of maximum extension of the coil springs 704, the frame may be automatically displaced and oriented to conform to the vertical and horizontal taper of the wall 702.

## Claims

1. A floor mountable aircraft seat (102) comprising a posterior surface, a seal frame and a gap covering fabric (400) extending from the posterior surface of the aircraft seat, the seal frame comprising:
a frame (200) disposed on the posterior surface of the floor mountable aircraft seat;
at least two frame displacing elements (208, 504, 608); and
one or more fabric tensioning elements (210, 212, 214, 216) configured to keep the gap covering fabric (400) connected to the posterior surface of the aircraft seat in tension around the frame (200), and wherein the at least two frame displacing elements are configured to independently displace vertical edges of the frame and independently displace horizontal edges of the frame to support the gap covering fabric .

2. The seat of Claim 1, wherein the one or more fabric tensioning elements comprise:
a plurality of rigid fabric connection strips disposed on the frame, each defining a plurality of elastic cord connection elements; and
a plurality of elastic cords, each configured to elastically connect an edge of the gap covering fabric to one or more of the rigid fabric connection strips via the elastic cord connection elements.

3. The seat of Claim 1 or 2, wherein the at least two frame displacing elements each comprise a leaf spring (504).

4. The seat of Claim 1 or 2, wherein the at least two frame displacing elements comprise four linear actuators (608), each disposed proximal to a corner of the frame.

5. The seat of Claim 4, wherein the linear actuator comprises a compression spring (704)

6. The seat of Claim 1 or 2, wherein the at least two frame displacing elements comprises four manually adjustable extension elements, each disposed proximal to a corner of the frame.

7. The seat of any preceding Claim, wherein:
the frame comprises two vertical edges (604) and one or more horizontal edges; and
each vertical edge is pivotably connected at a terminal to a terminal of a horizontal edge.

## Patentansprüche

1. Bodenmontierbarer Flugzeugsitz (102), umfassend eine hintere Fläche, einen Dichtungsrahmen und ein Spaltabdeckungsgewebe (400), das sich von der hinteren Fläche des Flugzeugsitzes erstreckt, wobei der Dichtungsrahmen Folgendes umfasst:
einen Rahmen (200), der an der hinteren Fläche des bodenmontierbaren Flugzeugsitzes angeordnet ist;
mindestens zwei Rahmenverschiebungselemente (208, 504, 608); und ein oder mehrere Gewebespannelemente (210, 212, 214, 216), die dazu konfiguriert sind, das mit der hinteren Fläche des Flugzeugsitzes verbundene Spaltabdeckungsgewebe (400) um den Rahmen (200) herum unter Spannung halten, und
wobei die mindestens zwei Rahmenverschiebungselemente dazu konfiguriert sind, vertikale Kanten des Rahmens unabhängig zu verschieben und horizontale Kanten des Rahmens unabhängig zu verschieben, um das Spaltabdeckungsgewebe zu tragen.

2. Sitz nach Anspruch 1, wobei das eine oder die mehreren Gewebespannelemente Folgendes umfassen:
eine Vielzahl von starren Gewebeverbindungsstreifen, die auf dem Rahmen angeordnet sind und jeweils eine Vielzahl von elastischen Schnurverbindungselementen definieren; und
eine Vielzahl von elastischen Schnüren, die jeweils dazu konfiguriert sind, eine Kante des Spaltabdeckungsgewebes elastisch mit einem oder mehreren der starren Gewebeverbindungsstreifen über die elastischen Schnurverbindungselemente zu verbinden.

3. Sitz nach Anspruch 1 oder 2, wobei die mindestens zwei Rahmenverschiebungselemente jeweils eine Blattfeder (504) umfassen.

4. Sitz nach Anspruch 1 oder 2, wobei die mindestens zwei Rahmenverschiebungselemente vier lineare Aktuatoren (608) umfassen, die jeweils in der Nähe einer Ecke des Rahmens angeordnet sind.

5. Sitz nach Anspruch 4, wobei der lineare Aktuator eine Druckfeder (704) umfasst.

6. Sitz nach Anspruch 1 oder 2, wobei die mindestens zwei Rahmenverschiebungselemente vier manuell einstellbare Verlängerungselemente umfassen, die jeweils in der Nähe einer Ecke des Rahmens angeordnet sind.

7. Sitz nach einem der vorhergehenden Ansprüche, wobei:
der Rahmen zwei vertikale Kanten (604) und eine oder mehrere horizontale Kanten umfasst; und
jede vertikale Kante an einem Anschlusspunkt schwenkbar mit einem Anschlusspunkt einer horizontalen Kante verbunden ist.

## Revendications

1. Siège d'avion pouvant être monté sur un plancher (102) comprenant une surface postérieure, un cadre d'étanchéité et un tissu de recouvrement d'espace (400) se prolongeant à partir de la surface postérieure du siège d'avion, le cadre d'étanchéité comprend :
un cadre (200) disposé sur la surface postérieure du siège d'avion pouvant être monté sur un plancher ;
au moins deux éléments de déplacement de cadre (208, 504, 608) ; et
un ou plusieurs éléments de tension de tissu (210, 212, 214, 216) configurés pour maintenir le tissu de recouvrement d'espace (400) connecté à la surface postérieure du siège d'avion en tension autour du cadre (200), et
dans lequel les au moins deux éléments de déplacement de cadre sont configurés pour déplacer indépendamment les bords verticaux du cadre et déplacer indépendamment les bords horizontaux du cadre pour supporter le tissu de recouvrement d'espace.

2. Siège selon la revendication 1, dans lequel l'un ou plusieurs éléments de tension du tissu comprend :
une pluralité de bandes de connexion en tissu rigide disposées sur le cadre, chacune définissant une pluralité d'éléments de connexion en cordon élastique ; et
une pluralité de cordons élastiques, chacun configuré pour connecter élastiquement un bord du tissu de recouvrement d'espace à l'une ou plusieurs des bandes de connexion en tissu rigide via les éléments de connexion de cordon élastique.

3. Siège selon la revendication 1 ou 2, dans lequel au moins deux éléments de déplacement de cadre comportent chacun un ressort à lames (504).

4. Siège selon la revendication 1 ou 2, dans lequel au moins deux éléments de déplacement de cadre comportent quatre actionneurs linéaires (608), chacun disposé à proximité d'un coin du cadre.

5. Siège selon la revendication 4, dans lequel l'actionneur linéaire comporte un ressort de compression (704).

6. Siège selon la revendication 1 ou 2, dans lequel au moins deux éléments de déplacement de cadre comportent quatre éléments d'extension réglables manuellement, chacun disposé à proximité d'un coin du cadre.

7. Siège selon une quelconque revendication précédente, dans lequel :
le cadre comporte deux bords verticaux (604) et un ou plusieurs bords horizontaux ; et
chaque bord vertical est connecté de manière pivotante au niveau d'une borne à une borne d'un bord horizontal.
